# EUROPÄISCHE PATENTSCHRIFT

(11) **EP 1 807 636 B1**
(45) Veröffentlichungstag und Bekanntmachung des Hinweises auf die Patenterteilung: **24.06.2009**
(21) Anmeldenummer: 05807291.9
(22) Anmeldetag: 27.10.2005
(51) Int. Cl.: F16D 25/10, F16D 21/06, F16D 25/0638

(54) **DOPPELKUPPLUNGSANORDNUNG**
DUAL CLUTCH SYSTEM
ENSEMBLE EMBRAYAGE A DISQUE DOUBLE

(30) Priorität: 05.11.2004 DE 102004055361
(43) Veröffentlichungstag der Anmeldung: 18.07.2007
(73) Patentinhaber: GETRAG Getriebe- und Zahnradfabrik Hermann Hagenmeyer GmbH & Cie KG, 74199 Untergruppenbach (DE)
(72) Erfinder: GREMPLINI, Hansi, 71691 Freiberg (DE); FRONIUS, Kuno, 74348 Lauffen (DE)
(74) Vertreter: Steil, Christian
(86) Internationale Anmeldenummer: PCT/EP2005/011519
(87) Internationale Veröffentlichungsnummer: WO 2006/048179

(56) Entgegenhaltungen:
- EP-A- 0 282 169
- WO-A-20/04104439
- DE-A1- 10 118 756
- DE-A1- 10 133 638
- DE-A1-5102004 013 26
- DE-U1- 20 320 467
- US-A- 6 021 879
- US-A1- 2004 206 599

## Beschreibung

Die vorliegende Erfindung betrifft eine Doppelkupplungsanordnung für ein Doppelkupplungsgetriebe für Kraftfahrzeuge gemäß dem Oberbegriff des Anspruchs 1, wie es aus dem Dokument DE 101 18 756 A1 und in ähnlicher Weise aus dem Dokument DE 101 33 638 A1 bekannt ist, mit
- einer ersten und einer zweiten Reibkupplung, die jeweils fluidisch betätigbar sind,
- einer ersten Kolbenanordnung, die zur Betätigung der ersten Reibkupplung dient und einen ersten Kolben, einen ersten Kolbenraum und einen ersten Fliehkraftausgleichsraum aufweist,
- einer zweiten Kolbenanordnung, die zur Betätigung der zweiten Reibkupplung dient und einen zweiten Kolben, einen zweiten Kolbenraum und einen zweiten Fliehkraftausgleichsraum aufweist,
- wobei die Kolbenräume und die Fliehkraftausgleichsräume jeweils auf gegenüberliegenden Seiten der zugeordneten Kolben liegen und über Zuleitungen mit einer Ventilanordnung verbunden sind.

Eine derartige Doppelkupplungsanordnung ist allgemein bekannt.

Doppelkupplungsgetriebe weisen eine Doppelkupplungsanordnung sowie zwei Teilgetriebe auf. Die Teilgetriebe sind in der Regel in Vorgelegebauweise ausgeführt. Eines der Teilgetriebe ist dabei den geraden Gängen zugeordnet, das andere Teilgetriebe den ungeraden Gängen.

Durch überschneidende Betätigung der zwei Doppelkupplungen kann folglich ein Gangwechsel ohne Zugkraftunterbrechung durchgeführt werden.

Diese Art von Doppelkupplungsgetriebe eignet sich für Kraftfahrzeuge, insbesondere für Personenkraftwagen.

Bei den Doppelkupplungsanordnungen werden heutzutage in der Regel fluidisch betriebene Reibkupplungen verwendet, bspw. nasslaufende Lamellenkupplungen.

Dabei ist es aus Gründen einer kurzen axialen Bauform häufig bevorzugt, die zwei Doppelkupplungen radial ineinander zu verschachteln, wobei eine Reibkupplung radial innen und die andere radial außen liegt.

Zum Zuführen von Fluid, insbesondere Hydrauliköl, zu den Reibkupplungen ist es bekannt, eine Drehdurchführung mit einem Zapfenabschnitt vorzusehen, auf den eine gemeinsame Nabe der zwei Doppelkupplungen aufgeschoben wird.

Bei einer bekannten Doppelkupplungsanordnung sind dabei an der Drehdurchführung wie auch an der Nabe jeweils vier Kanäle vorgesehen, wobei zwei der Kanäle den zwei Kolbenräumen zugeordnet sind und wobei die anderen zwei Kanäle den zwei Fliehkrartausgleichsräumen zugeordnet sind.

Dabei liegt der Kanal für den ersten Kolbenraum axial an einem Ende. Hierzu benachbart ist ein Kanal für den ersten Fliehkraftausgleichsraum. Hierzu benachbart wiederum ist ein Kanal für den zweiten Kolbenraum und am axial anderen Ende ist ein Kanal angeordnet für den zweiten Fliehkraftausgleichsraum.

Es ist die Aufgabe der vorliegenden Erfindung, eine verbesserte Doppelkupplungsanordnung anzugeben.

Diese Aufgabe wird bei der eingangs genannten Doppelkupplungsanordnung durch die Merkmale des Anspruchs 1 gelöst, wobei die Fliehkraftausgleichsräume über eine gemeinsame Leitung mit der Ventilanordnung verbunden sind.

Ferner sind die Reibkupplungen als radial verschachtelte Lamellenkupplungen ausgebildet und weisen jeweils einen Innenlamellenträger und einen Anßenlamellenträger auf, wobei das Eingangsglied der radial äußeren Lamellenkupplung der Außenlamellenträger ist und wobei das Eingangsglied der radial inneren Kupplung der Innenlamellenträger ist.

Durch die Maßnahmen gemäß der Erfindung lässt sich insgesamt eine axial kompaktere Doppelkupplungsanordnung schaffen, insbesondere, da für die Einspeisung von Fluid weniger Zuleitungen zu den Kolbenräumen und Fluidausgleichsränmen notwendig sind. Zudem ergibt sich ein Gewichtsvorteil.

Bei der Doppelkupplungsanordnung gemäß der vorliegenden Erfindung ist ebenfalls eine geringe Baulänge erzielbar und es ergibt sich ein Gewichtsvorteil.

Bei der Doppelkupplungsanordnung der vorliegenden Erfindung ist es vorteilhaft, wenn die Eingangsglieder an einer Nabe gelagert sind und wobei die Nabe mit einer Antriebswelle drehfest verbunden ist.

Diese Maßnahme ermöglicht generell eine axial kompakte Konstruktion der Doppelkupplungsanordnung.

Dabei ist es von besonderem Vorteil, wenn die Antriebswelle über einen die Reibkupplungen radial umfassenden Käfig mit der Nabe verbunden ist.

Durch diese Maßnahme kann vorteilhafterweise erreicht werden, dass die Abtriebsglieder der Reibkupplungen in der Nähe der Antriebswelle an der Nabe radial vorbeigeführt werden.

Gemäß einer weiteren bevorzugten Ausführungsform ist die Nabe an einem gehäusefesten Zapfenabschnitt einer Drehdurchführung gelagert.

Hierbei kann erreicht werden, dass die Versorgung der Reibkupplungen mit Fluid zu deren Betrieb über die Drehdurchführung und die Nabe erfolgt.

Dabei ist es besonders vorteilhaft, wenn die Nabe Radialkanäle aufweist, um die Reibkupplungen mit Fluid zu versorgen.

Ferner ist es hierbei vorteilhaft, wenn die Nabe wenigstens zwei Betätigungs-Radialkanäle zur Betätigung der zwei Reibkupplungen aufweist. Der Begriff Radialkanal soll im vorliegenden Zusammenhang breit verstanden werden. In der Darstellung der Radialkanäle und der zugehörigen Drehdurchführung wird generell von einer Längsschnittansicht ausgegangen, in der jeweils folglich nur ein Radialkanal bzw. eine Projektion von Radialkanälen zu sehen ist. Es versteht sich jedoch, dass ein Radialkanal bspw. auch als eine Mehrzahl von in Umfangsrichtung verteilten Einzelkanälen, bspw. Bohrungen, verstanden werden kann. Auch soll im vorliegenden Zusammenhang unter einem einzelnen Radialkanal verstanden werden, wenn zwei in Umfangsrichtung versetzt angeordnete Einzelkanäle mit einem einzelnen Ringkanal einer Drehdurchführung verbunden sind, jedoch in axialer Richtung nach radial außen hin voneinander abweichen.

Vorzugsweise weist die Drehdurchführung eine Ringkanal auf, der die gemeinsame Leitung zu den beiden Fliehkraftausgleichsräumen bildet.

Besonders vorteilhaft ist es dabei, wenn der Ringkanal in axialer Richtung zwischen den zwei Betätigungs-Radialkanälen angeordnet ist.

Durch diese Maßnahme ist es möglich, den Ringkanal mit den zwei Fliehkraftausgleichsräumen zu verbinden, insbesondere dann, wenn diese in axialer Richtung benachbart zueinander zwischen den zwei Kolbenräumen angeordnet sind.

Gemäß einer weiteren bevorzugten Ausführungsform weist die Nabe wenigstens einen ersten Hilfs-Radialkanal, der mit dem ersten Fliehkraftausgleichsraum verbunden ist, und wenigstens einen zweiten Hilfs-Radialkanal auf, der mit dem zweiten Fliehkraftausgleichsraum verbunden ist, wobei die Hilfs-Radialkanäle radial innen mit dem Ringkanal verbunden sind.

Die Hilfs-Radialkanäle können dabei entweder jeweils aus sich in radialer Richtung nach außen verzweigenden, jeweils zusammenhängenden Kanälen bestehen. Es ist jedoch bevorzugt, wenn der erste Hilfs-Radialkanal und der zweite Hilfs-Radialkanal in Umfangsrichtung gegeneinander versetzt sind. In einer Projektion in Umfangsrichtung ist nur ein einzelner Radialkanal zu sehen, so dass vorliegend der Einfachheit halber an einigen Stellen von "einem" Hilfs-Radialkanal gesprochen wird.

Von besonderem Vorteil ist es hierbei ferner, wenn ein Eingangsglied von einer der Reibkupplungen mit der Nabe in einem Bereich zwischen den zwei Hilfs-Radialkanälen verbunden ist.

Hierdurch kann das Eingangsglied dieser Reibkupplung als Trennglied zwischen den zwei Fliehkraftausgleichsräumen verwendet werden. Bei der Reibkupplung, deren Eingangsglied so mit der Nabe verbunden ist, handelt es sich vorzugsweise um eine radial innenliegende Reibkupplung.

Gemäß einer weiteren bevorzugten Ausführungsform dient der Ringkanal ferner zur Versorgung wenigstens einer der Reibkupplungen mit Kühlfluid.

Gemäß einer weiteren bevorzugten Ausführungsform sind die Fliehkraftausgleichsräume fluidisch miteinander verbunden.

Die Fliehkraftausgleichsräume sind in der Regele ständig drucklos geschaltet, werden also mit Fluid, das nicht unter Druck steht, versorgt. Sofern bspw. eine Kupplung betätigt wird, indem unter Druck stehendes Fluid in den zugeordneten Kolbenraum eingeführt wird, wird Fluid aus dem zugeordneten Fliehkraftausgleichsraum verdrängt. Wenn die zwei Fliehkraftausgleichsräume fluidisch miteinander verbunden sind, ist dies einfacher zu bewerkstelligen. Es sind insbesondere keine komplizierten Kanalanordnungen in der Drehdurchführung und/oder der Nabe notwendig.

Generell ist es bei benachbarten Fliehkraftausgleichsräumen jedoch auch denkbar, dass diese bspw. durch Öffnungen in einem Trennglied (wie einem Eingangsglied einer radial inneren Reibkupplung) fluidisch miteinander verbunden sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht einer Doppelkupp- lungsanordnung (Halbschnittansicht einer im wesentlichen rotationssysmmetrischen Anordnung) gemäß einer Ausfüh- rungsform der vorliegenden Erfindung, im Zusammenhang mit zugeordneten Komponenten eines Doppelkupplungsgetriebes; und
- Fig. 2: eine Längsschnittansicht einer Nabe der Doppelkupplungs- anordnung von Figur 1.

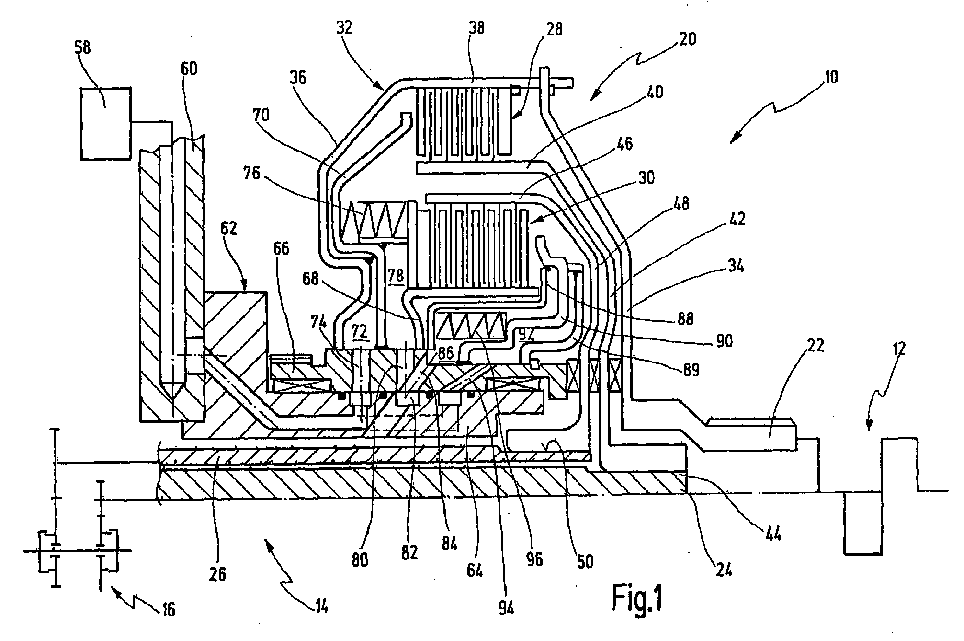

In Figur 1 ist ein Antriebsstrang eines Kraftfahrzeuges generell mit 10 bezeichnet.

Der Antriebsstrang 10 weist einen schematisch angedeuteten Verbrennungsmotor 12 auf, dessen Ausgang mit einem Doppelkupplungsgetriebe 14 verbunden ist.

Der Antriebsstrang 10 ist insbesondere für Kraftfahrzeuge geeignet. Der Motor zum Antrieb des Kraftfahrzeuges kann der Verbrennungsmotor 12 oder ein beliebiger anderer Antriebsmotor, wie bspw. ein Elektroantrieb, ein Hybridantrieb oder Ähnliches, sein.

Das Doppelkupplungsgetriebe 14 beinhaltet ein Stufengetriebe in Vorgelegebauweise, das in der Figur schematisch mit 16 bezeichnet ist und zwei Teilgetriebe beinhaltet.

Ferner weist das Doppelkupplungsgetriebe 14 eine Doppelkupplungsanordnung 20 auf, deren Eingang mit dem Ausgang des Verbrennungsmotors 12 verbunden ist und das ausgangsseitig mit dem Stufengetriebe 16 verbunden ist.

Genauer gesagt weist die Doppelkupplungsanordnung 20 eine Eingangswelle 22 auf, die über eine Verzahnung oder Ähnliches drehfest mit der Abtriebswelle des Verbrennungsmotors 12 verbunden werden kann.

Die Doppelkupplungsanordnung 20 weist ferner eine erste Ausgangswelle 24 in Form einer Vollwelle auf, die mit einem ersten Teilgetriebe des Stufengetriebes 16 verbunden ist. Ferner weist die Doppelkupplungsanordnung 20 eine zweite Ausgangswelle 26 in Form einer Hohlwelle auf, die mit dem zweiten Teilgetriebe verbunden ist. Die Wellen 24, 26 sind konzentrisch zueinander angeordnet.

Die Doppelkupplungsanordnung 20 weist eine erste Reibkupplung 28 auf, die dazu ausgelegt ist, die Eingangswelle 22 mit der ersten Ausgangswelle 24 zu verbinden, und weist eine zweite Reibkupplung 30 auf, die dazu ausgelegt ist, die Eingangswelle 22 mit der zweiten Ausgangswelle 26 zu verbinden.

Die zwei Reibkupplungen 28, 30 sind radial verschachtelt, wobei die erste Reibkupplung 28 radial außen angeordnet ist, und wobei die zweite Reibkupplung 30 konzentrisch hierzu radial innen angeordnet ist.

Die zwei Reibkupplungen 28, 30 sind in einem Käfig 32 aufgenommen, der mit der Eingangswelle 22 verbunden ist. Genauer gesagt weist der Käfig 32 einen ersten Käfigabschnitt 34 auf, der mit der Eingangswelle 22 verbunden ist und sich von dieser radial nach außen erstreckt. Ferner weist der Käfig 32 einen zweiten Käfigabschnitt 36 auf, der drehfest mit dem ersten Käfigabschnitt 34 verbunden ist und einen zylindrischen Abschnitt in Form eines Außenlamellenträgers 38 der ersten Reibkupplung 28 und einen sich radial nach innen erstreckenden Teilabschnitt aufweist.

Ein Innenlamellenträger 40 der ersten Reibkupplung 28 ist mit einem ersten Korb 42 verbunden, der unmittelbar benachbart zu dem ersten Käfigabschnitt 34 verläuft und über eine erste Verzahnung 44 mit der ersten Ausgangswelle 24 verbunden ist.

Die zweite Reibkupplung 30 weist einen Außenlamellenträger 46 auf, der mit einem zweiten Korb 48 verbunden ist. Der zweite Korb 48 verläuft in unmittelbarer Nachbarschaft zu dem ersten Korb 42 und ist über eine zweite Verzahnung 50 mit der zweiten Ausgangswelle 26 (der Hohlwelle) verbunden.

Wie es in der Figur schematisch angedeutet ist, können zwischen dem ersten Käfigabschnitt 34 und dem ersten Korb 42 bzw. zwischen dem ersten Korb 42 und dem zweiten Korb 48 Axiallager angeordnet sein.

In der Figur ist bei 60 ein Kupplungsträger gezeigt, der gehäusefest, also nicht mitdrehend, gelagert ist. Ferner ist bei 58 eine Ventilanordnung bzw. eine Hydrauliksteueranordnung schematisch dargestellt, mittels der die Doppelkupplungsanordnung betrieben werden kann.

An dem Kupplungsträger 60 ist eine Drehdurchführungsanordnung 62 befestigt, die einen axial vorstehenden hohlen Zapfenabschnitt 64 aufweist, der konzentrisch um die zwei Ausgangswellen 24, 26 herum angeordnet ist. Der Zapfenabschnitt 64 erstreckt sich von der Seite des zweiten Käfigabschnittes 36 axial bis nahezu hin zu dem zweiten Korb 48, der mit der zweiten Ausgangswelle 26 verbunden ist. Dabei liegt der Zapfenabschnitt 64 radial innerhalb der zwei Reibkupplungen 28, 30.

An dem Zapfenabschnitt 64 der Drehdurchführungsanordnung 62 ist eine Nabe 66 drehbar gelagert. In der Figur sind zwei Lager gezeigt, mittels denen die Nabe 66 an dem Zapfenabschnitt 64 der Drehdurchführungsanordnung 62 drehbar gelagert ist.

Der zweite Käfigabschnitt 36 ist starr mit der Nabe 66 verbunden, so dass die Nabe 66 ein Eingangsglied der Doppelkupplungsanordnung 20 bildet und mit der Drehzahl des angeschlossenen Motors 12 mitdreht.

An der Nabe 66 ist ein Innenlamellenträger 68 der zweiten Reibkupplung 30 festgelegt.

Zwischen dem Innenlamellenträger 68 und dem zweiten Käfigabschnitt 36 ist ein erster Kolben 70 der ersten Reibkupplung 28 axial gegenüber der Nabe 66 verschieblich gelagert. Der Kolben 70 ist scheibenartig ausgebildet und erstreckt sich von der Nabe 66 radial nach außen bis hin zu der ersten Reibkupplung 28.

Zwischen dem zweiten Käfigabschnitt 36 und dem ersten Kolben 70 ist ein erster Kolbenraum 72 gebildet. Der erste Kolbenraum 72 ist über die Drehdurchführungsanordnung 62 und den Kupplungsträger 60 mit der Ventilanordnung 58 verbunden. Durch Zuführen von Fluid (in der Regel Hydraulikfluid wie z.B. ATF-Öl) in den ersten Kolbenraum '72 (über den 1. Betätigungs-Radialkanal 74, s.u.) wird der erste Kolben 70 gegenüber dem zweiten Käfigabschnitt 36 axial versetzt und drückt die Lamellen der ersten Reibkupplung 28 zusammen, so dass diese in Reibschluss gelangen, um so die erste Reibkupplung 28 zu schließen und die Eingangswelle 22 mit der ersten Ausgangswelle 24 zu verbinden.

Der Übergang vom offenen Zustand in den geschlossenen Zustand der ersten Reibkupplung 28 kann gesteuert so erfolgen, dass eine geeignete Schlupfphase eingerichtet wird, um so ein ruckfreies Anfahren bzw. Gangwechseln zu ermöglichen.

Zum Zwecke des Zuführens von Hydraulikfluid in den ersten Kolbenraum 72 ist in der Nabe 66 ein erster Betätigungs-Radialkanal 74 vorgesehen (gebildet bspw. durch eine Mehrzahl von in Umfangsrichtung versetzten Bohrungen), der den ersten Kolbenraum 72 mit einem entsprechenden (in der Figur nicht näher bezeichneten) ersten Ringkanal des Zapfenabschnittes 64 verbindet, wobei der erste Ringkanal wiederum über geeignete Kanäle in der Drehdurchführungsanordnung 62 mit dem Kupplungsträger 60 bzw. der Ventilanordnung 58 verbunden ist.

An dem Innenlamellenträger 68 ist ferner ein nicht näher bezeichneter Steg ausgebildet, an dem sich eine Mehrzahl von ersten Rückstellfedern 76 abstützt, die über den Umfang gleichmäßig verteilt angeordnet sind. Die Betätigung des ersten Kolbens 70 erfolgt demzufolge gegen die Kraft der ersten Rückstellfedern 76.

Zwischen dem Kolben 70 und dem Innenlamellenträger 68 der zweiten Reibkupplung 30 ist ein erster Fliehkraftausgleichsraum 78 vorgesehen.

Der Fliehkraftausgleichsraum 78 hat die Funktion, eine Gegenkraft zu einer durch die Fliehkraft erzeugten Kupplungsbetätigungskraft zu erzeugen, die in dem zugeordneten ersten Kolbenraum 72 erzeugt wird.

Insbesondere bei höheren Drehzahlen wird das in dem ersten Kolbenraum 72 vorhandene Hydraulikfluid so nach außen gepresst, dass schließlich eine Kraft auf den Kolben in Richtung der Betätigung der ersten Reibkupplung 28 ausgeübt wird. Diese Kraft wirkt folglich einer durch die Rückstellfedern 76 ausgeübten Rückstellkraft beim Öffnen der ersten Reibkupplung 28 nach der Art einer Störkraft entgegen. Zum Ausgleich dieser "Störkraft" lässt man Hydraulikfluid drucklos in den gegenüberliegenden Fliehkraftausgleichsraum 78 strömen. Dort wird durch die Fliehkraft eine Gegenkraft in Richtung Öffnen der ersten Reibkupplung 28 erzeugt, die der genannten Störkraft entgegenwirkt und diese aufhebt.

Der erste Fliehkraftausgleichsraum 78 ist zu diesem Zweck über einen ersten Hilfs-RadialkKanal 80 mit einem zweiten Ringkanal 82 an dem Zapfenabschnitt 64 verbunden, wobei der zweite Ringkanal 82 wiederum über entsprechende Kanäle bzw. Leitungen in der Drehdurchführungsanordnung 62 mit der Ventilanordnung 58 verbunden ist.

Auf der anderen Seite des Innenlamellenträgers 68 ist ein zweiter Fliehkraftausgleichsraum 86 eingerichtet. Dieser ist über einen zweiten Hilfs-Radialkanal 84 mit zweiten Ringkanal 82 des Zapfenabschnittes 64 verbunden.

Die zwei Fliehkraftausgleichsräume 78, 86 sind folglich benachbart zueinander und lediglich durch den Innenlamellenträger 68 der zweiten Reibkupplung 30 voneinander getrennt.

Der zweite Fliehkraftausgleichsraum 86 wird auf der axial andren Seite durch einen zweiten Kolben 90 eingegrenzt, der ebenfalls in axialer Richtung gegenüber der Nabe 66 verschieblich gelagert ist.

An der Nabe 66 ist ein Stützglied 89 befestigt. Dieses erstreckt sich axial zwischen dem zweiten Kolben 90 und dem zweiten Korb 48 in radialer Richtung nach außen. Zwischen dem Stützglied 89 und dem zweiten Kolben 90 ist ein zweier Kolbenraum 92 eingerichtet. Der zweite Kolbenraum 92 ist über einen zweiten Betätigungs-Radialkanal 94 mit einem dritten Ringkanal an dem Zapfenabschnitt 64 verbunden. Über diesen dritten Ringkanal ist der zweite Kolbenraum 92 mit der Ventilanordnung 58 verbunden.

In dem zweiten Fliehkraftausgleichsraum 86 sind ferner zweite Rückstellfedern 96 angeordnet, die sich an einem Lagerelement 88 abstützen. Das Lagerelement 88 wiederum stützt sich an einem freien Ende des Innenlamellenträgers 68 ab, bzw. ist hieran festgelegt. Das Lagerelement 88 dient ferner zur Umgrenzung des zweiten Fliehkraftausgleichsraumes 86, durch eine Dichtung zwischen dem Lagerelement 88 und dem zweiten Kolben 90.

Die Funktionsweise der zweiten Reibkupplung 30 entspricht jener der ersten Reibkupplung 28, wobei lediglich die Betätigungsrichtung entgegengesetzt gerichtet ist. Während der erste Kolben 70 auf der einen Seite der zwei Reibkupplungen 28, 30 angeordnet ist, ist der zweite Kolben 90 auf der gegenüberliegenden Seite angeordnet. Der zweite Kolben 90 ist ebenfalls als scheibenartiges Element ausgebildet, das an der Nabe 66 in einem axial mittleren Bereich der zweiten Reibkupplung 30 gelagert ist. Der zweite Kolben 90 erstreckt sich von diesem axial mittleren Bereich radial nach außen um die zweite Reibkupplung 30 herum. Hierdurch ist der zweite Fliehkraftausgleichsraum 86 im Wesentlichen radial innerhalb der zweiten Reibkupplung 30 angeordnet. Auch die zweiten Rückstellfedern 96 sind radial innerhalb der zweiten Reibkupplung 30 angeordnet.

Durch diese Maßnahme kann die Doppelkupplungsanordnung 20 insgesamt besonders kompakt in axialer Richtung ausgebildet werden.

Hierzu trägt auch bei, dass die zwei Fliehkraftausgleichsäume 78, 86 benachbart zueinander angeordnet sind und über den zweiten Ringkanal 82 an dem Zapfenabschnitt 64 der Drehdurchführungsanordnung 62 mit der Ventilanordnung 58 verbindbar sind, also über einen einzigen Kanal (eine gemeinsame Leitung) letztlich mit drucklosem Hydraulikfluid versorgbar sind.

Über den zweiten Ringkanal 82 bzw. über die in Umfangsrichtung versetzt angeordneten Hilfs-Radialkanäle ist es ferner möglich, die Reibkupplungen 28, 30 mit Kühlfluid zu versorgen. Dieses tritt bspw. durch Bohrungen in den Lamellenträgern aufgrund der Fliehkräfte radial nach aussen aus und kühlt beide Reibkupplungen 28, 30. Von dort gelangt das Fluid (in der Regel über einen Kühler) zurück.

Die Rückstellfedern 76, 96 sind in der Figur als Schraubenfedern dargestellt. Statt dessen können jedoch auch Tellerfedern verwendet werden.

Von besonderer Bedeutung ist es, dass an dem Zapfenabschnitt 64 der Drehdurchführungsanordnung 62 nur noch drei in axialer Richtung versetzt angeordnete Umfangsnuten (Ringkanäle) zur Einspeisung von Hydraulikfluid zu der Doppelkupplungsanordnung 20 notwendig sind. Hierdurch wird auch eine geringe axiale Baulänge und ein Gewichtsvorteil erzielt.

Zum Betätigen der Reibkupplungen 28, 30 wird in die jeweiligen Rolbenräume 72 bzw. 92 jeweils Hydraulikfluid unter Druck im Bereich von z.B. 15 bar eingeführt.

Obgleich in der Figur die Nabe 66 mit jeweils einem ersten Betätigungs-Radialkanal 74, einem dritten Betätigungs-Radialkanal 94 und mit zwei Hilfs-Radialkanälen 80, 84 dargestellt ist, versteht sich, dass entsprechende Kanäle bzw.Bohrungen über den Umfang der Nabe 66 verteilt angeordnet sein können.

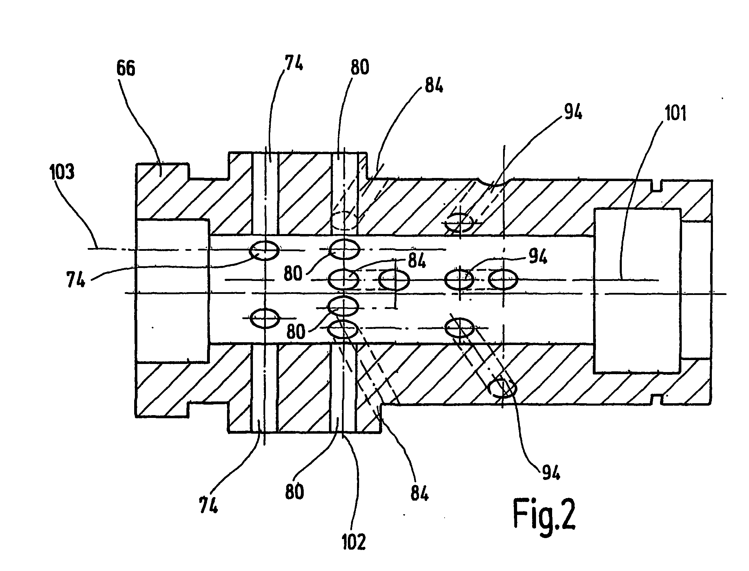

Die Nabe 66 ist in Figur 2 in einer Längsschnittansicht dargestellt. Hier ist zu erkennen, dass die "Radialkanäle" 74, 80, 84, 94 jeweils aus einer Mehrzahl von umfänglich verteilten Bohrungen bestehen können. Die Bohrungen der Kanäle 80, 84 sind dabei in Umfangsrichtung alternierend vorgesehen. Die Kanäle 80, 84 münden radial innen auf einer gemeinsamen Linie 102.

Die Bohrungen des Kanals 80 verlaufen radial senkrecht, die des Kanals 84 radial unter einem Winkel nach außen.

Bohrungen der Kanäle 84, 94 der Kupplung 30 münden außen jeweils auf einer axialen Linie 101. Entsprechen münden die Bohrungen der Kanäle 80, 74 jeweils auf einer in Umfangsrichtung versetzten axialen Linie 103.

## Patentansprüche

1. Doppelkupplungsanordnung (20) für ein Doppelkupplungsgetriebe (14) für Kraftfahrzeuge, mit
- einer ersten und einer zweiten Reibkupplung (28, 30), die jeweils fluidisch betätigbar sind,
- einer ersten Kolbenanordnung, die zur Betätigung der ersten Reibkupplung (28) dient und einen ersten Kolben (70), einen ersten Kolbenraum (72) und einen ersten Fliehkraftausgleichsraum (78) aufweist,
- einer zweiten Kolbenanordnung, die zur Betätigung der zweiten Reibkupplung (30) dient und einen zweiten Kolben (90), einen zweiten Kolbenraum (92) und einen zweiten Fliehkraftausgleichsraum (86) aufweist,
- wobei die Kolbenräume (72, 92) und die Fliehkraftausgleichsräume (78, 86) jeweils auf gegenüberliegenden Seiten der zugeordneten Kolben (70, 90) liegen und über Zuleitungen (74, 82, 94) mit einer Ventilanordnung verbunden sind,
- wobei die Fliehkraftausgleichsräume (78, 86) über eine gemeinsame Leitung (82) mit der Ventilanordnung (58) verbunden sind, und
- wobei die Reibkupplungen (28, 30) als radial verschachtelte Lamellenkupplungen (28, 30) ausgebildet sind und jeweils einen Innenlamellenträger (40, 68) und einen Außenlamellenträger (38, 46) aufweisen,
**dadurch gekennzeichnet, dass** das Eingangsglied (38) der radial äußeren Lamellenkupplung (28) der Außenlamellenträger (38) ist und dass das Eingangsglied (68) der radial inneren Kupplung (30) der Innenlamellenträger (68) ist.

2. Doppelkupplungsanordnung nach Anspruch 1, **dadurch gekennzeichnet, dass** die Eingangsglieder (38, 68) an einer Nabe (66) gelagert sind, wobei die Nabe (66) mit einer Antriebswelle (22) drehfest verbunden ist.

3. Doppelkupplungsanordnung nach Anspruch 2, **dadurch gekennzeichnet, dass** die Antriebswelle (22) über einen die Reibkupplungen (28, 30) radial umfassenden Käfig (32) mit der Nabe (66) verbunden ist.

4. Doppelkupplungsanordnung nach Anspruch 2 oder 3, **dadurch gekennzeichnet, dass** die Nabe (66) an einem gehäusefesten Zapfenabschnitt (64) einer Drehdurchführung (62) gelagert ist.

5. Doppelkupplungsanordnung nach Anspruch 4, **dadurch gekennzeichnet, dass** die Nabe (66) Radialkanäle (74, 80, 84, 94) aufweist, um die Reibkupplungen (28, 30) mit Fluid zu versorgen.

6. Doppelkupplungsanordnung nach Anspruch 5, **dadurch gekennzeichnet, dass** die Nabe (66) wenigstens zwei Betätigungs-Radialkanäle (74, 94) zur Betätigung der Reibkupplungen (28, 30) aufweist.

7. Doppelkupplungsanordnung nach einem der Ansprüche 4 bis 6, **dadurch gekennzeichnet, dass** die Drehdurchführung einen Ringkanal (82) aufweist, der die gemeinsame Leitung (82) zu den beiden Fliehkraftausgleichsräumen (78, 86) bildet.

8. Doppelkupplungsanordnung nach Anspruch 7, **dadurch gekennzeichnet, dass** die Nabe (66) wenigstens einen ersten Hilfs-Radialkanal (80), der mit dem ersten Fliehkraftausgleichsraum (78) verbunden ist, und wenigstens einen weiten Hilfs-Radialkanal (84) aufweist, der mit dem zweiten Fliehkraftausgleichsraum (86) verbunden ist, wobei die Hilfs-Radialkanäle (80, 84) radial innen mit dem Ringkanal (82) verbunden sind.

9. Doppelkupplungsanordnung nach Anspruch 8, **dadurch gekennzeichnet, dass** ein Eingangsglied (68) von einer (30) der Reibkupplungen (28, 30) mit der Nabe (66) in einem Bereich zwischen den zwei Hilfs-Radialkanälen (80, 84) verbunden ist.

10. Doppelkupplungsanordnung nach einem der Ansprüche 6 bis 9, **dadurch gekennzeichnet, dass** der Ringkanal (82) ferner zur Versorgung wenigstens einer der Reibkupplungen (28, 30) mit Kühlfluid dient.

11. Doppelkupplungsanordnung nach einem der Ansprüche 1 bis 10, **dadurch gekennzeichnet, dass** die Fliehkraftausgleichsräume (78, 86) fluidisch miteinander verbunden sind.

## Claims

1. A dual clutch arrangement (20) for a dual clutch transmission (14) for motor vehicles, having
- a first and a second friction clutch (28, 30) which are each fluidically actuable,
- a first piston arrangement which serves to actuate the first friction clutch (28) and has a first piston (70), a first piston space (72) and a first centrifugal force equalizing space (78),
- a second piston arrangement which serves to actuate the second friction clutch (30) and has a second piston (90), a second piston space (92) and a second centrifugal force equalizing space (86),
- with the piston spaces (72, 92) and the centrifugal force equalizing spaces (78, 86) being situated in each case on opposite sides of the associated piston (70, 90) and being connected by means of feed lines (74, 82, 94) to a valve arrangement,
- with the centrifugal force equalizing spaces (78, 86) being connected to the valve arrangement (58) by means of a common line (82), and
- with the friction clutches (28, 30) being embodied as radially nested multiplate clutches (28, 30) and have in each case one inner plate carrier (40, 68) and one outer plate carrier (38, 46),
**characterized in that**
- the input member (38) of the radially outer multiplate clutch (28) is the outer plate carrier (38) and **in that** the input member (68) of the radially inner clutch (30) is the inner plate carrier (68).

2. The dual clutch arrangement as claimed in claim 1, **characterized in that** the input members (38, 68) are mounted on a hub (66) and with the hub (66) being rotationally fixedly connected to a drive input shaft (22).

3. The dual clutch arrangement as claimed in claim 2, **characterized in that** the drive input shaft (22) is connected to the hub (66) by means of a cage (32) which radially surrounds the friction clutches (28, 30).

4. The dual clutch arrangement as claimed in claim 2 or 3, **characterized in that** the hub (66) is mounted on a spigot section (64), which is fixed to the housing, of a rotary leadthrough (62).

5. The dual clutch arrangement as claimed in claim 4, **characterized in that** the hub (66) has radial ducts (74, 80, 84, 94) in order to supply the friction clutches (28, 30) with fluid.

6. The dual clutch arrangement as claimed in claim 5, **characterized in that** the hub (66) has at least two radial actuating ducts (74, 94) for actuating the friction clutches (28, 30).

7. The dual clutch arrangement as claimed in one of claims 4 to 6, **characterized in that** the rotary leadthrough has an annular duct (82) which forms the common line (82) to the two centrifugal force equalizing spaces (78, 86).

8. The dual clutch arrangement as claimed in claim 7, **characterized in that** the hub (66) has at least one first radial auxiliary duct (80), which is connected to the first centrifugal force equalizing space (78), and at least one second radial auxiliary duct (84) which is connected to the second centrifugal force equalizing space (86), with the radial auxiliary ducts (80, 84) being connected radially at the inside to the annular duct (82).

9. The dual clutch arrangement as claimed in claim 8, **characterized in that** an input member (68) of one (30) of the friction clutches (28, 30) is connected to the hub (66) in a region between the two radial auxiliary ducts (80, 84).

10. The dual clutch arrangement as claimed in one of claims 6 to 9, **characterized in that** the annular duct (82) also serves to supply at least one of the friction clutches (28, 30) with cooling fluid.

11. The dual clutch arrangement as claimed in one of claims 1 to 10, **characterized in that** the centrifugal force equalizing spaces (78, 86) are fluidically connected to one another.

## Revendications

1. Agencement de double embrayage (20) pour une transmission à double embrayage (14) pour véhicules automobiles, comprenant:
- un premier et un deuxième embrayage à friction (28, 30) qui peuvent chacun être actionnés fluidiquement,
- un premier agencement de piston qui sert à l'actionnement du premier embrayage à friction (28) et qui présente un premier piston (70), un premier espace de piston (72) et un premier espace de compensation de la force centrifuge (78),
- un deuxième agencement de piston, qui sert à l'actionnement du deuxième embrayage à friction (30) et qui présente un deuxième piston (90), un deuxième espace de piston (92) et un deuxième espace de compensation de la force centrifuge (86),
- les espaces de piston (72, 92) et les espaces de compensation de la force centrifuge (78, 86) se situant à chaque fois sur des côtés opposés des pistons associés (70, 90) et étant connectés par le biais de conduites d'amenée (74, 82, 94) à un agencement de soupape,
- les espaces de compensation de la force centrifuge (78, 86) étant connectés par le biais d'une conduite commune (82) à l'agencement de soupape (58), et
- les embrayages à friction (28, 30) étant réalisés sous forme d'embrayages à disques emboîtés radialement (28, 30) et présentant chacun un support de disques interne (40, 68) et un support de disques externe (38, 46),
**caractérisé en ce que** l'organe d'entrée (38) de l'embrayage à disque radialement extérieur (28) est le support de disques externe (38) et **en ce que** l'organe d'entrée (68) de l'embrayage radialement intérieur (30) est le support de disques interne (68).

2. Agencement de double embrayage selon la revendication 1, **caractérisé en ce que** les organes d'entrée (38, 68) sont montés sur un moyeu (66), le moyeu (66) étant connecté de manière solidaire en rotation à un arbre d'entraînement (22).

3. Agencement de double embrayage selon la revendication 2, **caractérisé en ce que** l'arbre d'entraînement (22) est connecté au moyeu (66) par le biais d'une cage (32) comprenant radialement les embrayages à friction (28, 30).

4. Agencement de double embrayage selon la revendication 2 ou 3, **caractérisé en ce que** le moyeu (66) est monté sur une portion de tourillon (64), fixée au boîtier, d'une traversée tournante (62).

5. Agencement de double embrayage selon la revendication 4, **caractérisé en ce que** le moyeu (66) présente des canaux radiaux (74, 80, 84, 94) afin d'alimenter les embrayages à friction (28, 30) en fluide.

6. Agencement de double embrayage selon la revendication 5, **caractérisé en ce que** le moyeu (66) présente au moins deux canaux radiaux d'actionnement (74, 94) pour l'actionnement des embrayages à friction (28, 30).

7. Agencement de double embrayage selon l'une quelconque des revendications 4 à 6, **caractérisé en ce que** la traversée tournante présente un canal annulaire (82) qui forme la conduite commune (82) allant aux espaces de compensation de la force centrifuge (78, 86).

8. Agencement de double embrayage selon la revendication 7, **caractérisé en ce que** le moyeu (66) présente au moins un premier canal radial auxiliaire (80) qui est connecté au premier espace de compensation de la force centrifuge (78), et au moins un deuxième canal radial auxiliaire (84), qui est connecté au deuxième espace de compensation de la force centrifuge (86), les canaux radiaux auxiliaires (80, 84) étant connectés radialement à l'intérieur au canal annulaire (82).

9. Agencement de double embrayage selon la revendication 8, **caractérisé en ce qu'**un organe d'entrée (68) est connecté par l'un (30) des embrayages à friction (28, 30) au moyeu (66) dans une région entre les deux canaux radiaux auxiliaires (80, 84).

10. Agencement de double embrayage selon l'une quelconque des revendications 6 à 9, **caractérisé en ce que** le canal annulaire (82) sert en outre à l'alimentation d'au moins l'un des embrayages à friction (28, 30) en fluide de refroidissement.

11. Agencement de double embrayage selon l'une quelconque des revendications 1 à 10, **caractérisé en ce que** les espaces de compensation de la force centrifuge (78, 86) sont connectés fluidiquement les uns aux autres.
